# EUROPÄISCHE PATENTSCHRIFT

(11) **EP 1 229 254 B1**
(45) Veröffentlichungstag und Bekanntmachung des Hinweises auf die Patenterteilung: **19.01.2005**
(21) Anmeldenummer: 02002538.3
(22) Anmeldetag: 04.02.2002
(51) Int. Cl.: F16B 5/04, F16B 19/08

(54) **Stanznietverbindung und Halbhohlstanzniet**
Punch riveting and hollow punch rivet
Liaison par rivetage poinçonnant et rivet poinçonnant creux

(30) Priorität: 02.02.2001 DE 20101832 U
(43) Veröffentlichungstag der Anmeldung: 07.08.2002
(73) Patentinhaber: Richard Bergner Verbindungstechnik GmbH & Co KG, 91126 Schwabach (DE)
(72) Erfinder: Dehlke, Klaus, 91575 Windsbach (DE)
(74) Vertreter: Tergau & Pohl Patentanwälte

(56) Entgegenhaltungen:
- EP-A- 0 833 063
- WO-A-99/25982

## Beschreibung

Die Erfindung betrifft eine Stanznietverbindung bei der zumindest zwei Fügeteile mittels eines Halbhohlstanzniets miteinander verbunden sind. Die Erfindung betrifft weiterhin einen Halbhohlstanzniet für eine solche Stanznietverbindung.

Bei der Stanzniettechnik werden zwei oder mehr Fügeteile, insbesondere Bleche, mit Hilfe eines Stanzniets fest und dauerhaft miteinander verbunden. Bei den Stanznieten wird generell unterschieden zwischen dem Vollniet und dem Halbhohlstanzniet. Der Halbhohlstanzniet umfasst einen Nietkopf, an den sich ein Nietschaft anschließt, welcher einen zu einem Nietfuß hin offenen Schafthohlraum umgibt. Beim Füge- oder Stanznietvorgang wird der Halbhohlstanzniet mittels eines Stempels in die zu verbindenden Fügeteile eingetrieben, welche auf einer Matrize abgestützt sind. Dabei wird das oder die oberen Fügeteile gestanzt, bevor sich der Nietschaft im unteren Fügeteil plastisch verformt und durch Ausbildung eines Hintergriffs eine feste und dauerhafte Verbindung schafft.

Die Qualität der Stanznietverbindung wird entscheidend beeinflußt einerseits von der geometrischen Ausbildung des Halbhohlstanzniets sowie andererseits von den Materialeigenschaften der einzelnen Elemente der Stanznietverbindung, also der Fügeteile und des Halbhohlstanzniets. So sollten zur Vermeidung von Korrosionsschäden für eine Stanznietverbindung möglichst nur Elemente mit gleichem oder vergleichbarem elektrochemischen Potential verwendet werden. Die Materialwahl des Halbhohlstanzniets wird daher entscheidend bestimmt durch das Material der Fügeteile.

Herkömmlich werden mit Halbhohlstanznieten aus Stahl normale Stahlbleche miteinander verbunden. Diese Nieten aus Stahl weisen einen angespitzten Nietfuß auf, um ein einfaches Eindringen in die Fügeteile zu ermöglichen. Ein solcher Stanzniet mit angespitztem Nietfuß ist beispielsweise in der DE 44 31 769 A1 beschrieben, wobei der Stanzniet zur Verbindung von Blechen höherer Festigkeit vorgesehen ist und hierzu aus einem besonderen austenitischen Stahl besteht.

Aufgrund des allgemeinen Trends zum Leichtbau, insbesondere im Bereich der Kraftfahrzeugindustrie, werden die herkömmlich verwendeten Stahlbleche zusehends durch andere Materialien oder Konstruktionen ersetzt. Insbesondere hat Leichtmetall, besonders Aluminium, Eingang in den Kraftfahrzeugbereich gefunden.

Zur Verbindung von Leichtmetall-Fügeteilen ist in der EP 0 833 063 A1 ein Halbhohlstanzniet aus Leichtmetall beschrieben. Im Unterschied zu den üblicherweise eingesetzten Stanznieten aus Stahl weist dieser keinen angespitzten, sondern einen stumpfen Nietfuß auf. Diese Maßnahme gewährleistet bei der Verwendung des Leichtmetall-Halbhohlstanzniets ein günstiges Umformverhalten. Insbesondere verhindert es ein vorzeitiges plastisches Verformen des Nietschafts beim Fügevorgang aufgrund des relativ weichen und wenig steifen Materials. Typischerweise weist ein solcher Leichtmetall-Halbhohlstanzniet eine Zugfestigkeit von etwa 450N/mm² auf. Damit liegt diese Zugfestigkeit deutlich unter derjenigen eines Halbhohlstanzniets aus Stahl, welcher üblicherweise eine Zugfestigkeit von etwa bis zu 1400N/mm² aufweist. Aufgrund dieser hohen Zugfestigkeit ist es bei den Stahlnieten möglich, normale Stahlbleche, deren Zugfestigkeit etwa bis 500N/mm² reicht, zu durchstanzen und miteinander verbinden.

Der Erfindung liegt die Aufgabe zugrunde, eine für den Leichtbau geeignete Stanznietverbindung zu ermöglichen.

Die Aufgabe wird gemäß der Erfindung gelöst durch eine Stanznietverbindung mit zumindest zwei Fügeteilen aus einem hochfesten Stahl, die mittels eines Halbhohlstanzniets miteinander verbunden sind, der aus Stahl gebildet ist und der einen Nietkopf sowie einen sich daran anschließenden Nietschaft mit einem endseitigen Nietfuß aufweist, wobei der Nietfuß im Ausgangszustand vor dem Fügevorgang stumpf ausgebildet ist.

Die Erfindung beruht auf der Überlegung, dass zur Verwirklichung des angestrebten Leichtbaus neben der Verwendung von Leichtmetall auch hoch- und höchstfeste Stahlbleche herangezogen werden können. Aufgrund der guten Festigkeitseigenschaften besteht nämlich die Möglichkeit, die Bleche aus hochfestem Stahl im Vergleich zu Blechen aus normalem Stahl wesentlich dünner und damit leichter auszubilden. Zum Stanznieten derartiger hochfester Fügeteile ist jedoch ein herkömmlicher Halbhohlstanzniet aus Stahl mit einem angespitzten Nietfuß ungeeignet. Denn aufgrund der hohen Festigkeit der Fügeteile tritt der Umformvorgang des Nietschafts unerwünscht früh ein und unter Umständen ist ein Durchstanzen des oberen Fügeteils nicht möglich.

Durch die bewußt stumpfe Ausbildung des Nietfußes wird in überraschender Weise ein günstiges Umformverhalten des Halbhohlstanzniets beim Fügen der hochfesten Fügeteile erzielt. Denn aufgrund der stumpfen Ausbildung ist das Bestreben des Nietschafts sich aufzuspreizen im Vergleich zu einem angespitzten Nietfuß reduziert. Daher tritt das Aufspreizen wunschgemäß erst dann auf, wenn der Nietschaft mit dem Nietfuß in das untere Fügeteil eindringt. Um die Kosten für die Herstellung des Halbholniets möglichst gering zu halten, wird dieser in einem Kaltumformungsprozess hergestellt, beispielsweise durch Kaltfließpressen.

Um die beiden Fügeteile mit einer möglichst geringen Blechstärke versehen zu können, weist der hochfeste Stahl der Fügeteile eine Zugfestigkeit größer als 500N/mm² auf. Insbesondere liegt deren Zugfestigkeit oberhalb von 700N/mm² und reicht bis zu 1500N/mm². Die Zugfestigkeit des verwendeten Halbhohlstanzniets liegt im Bereich eines üblichen Stahl-Halbhohlstanzniets, also im Bereich zwischen 1200 und 1400 N/mm² und kann Werte von bis zu 2000 N/mm² erreichen.

Um ein geeignetes Aufspreizverhalten des Nietschafts zu gewährleisten, beträgt die Schafthohlraumlänge des vom Nietschaft umgebenen Schafthohlraums etwa das 0,6-fache des Nietfußaußendurchmessers. Insbesondere liegt der Quotient aus Schafthohlraumlänge und Nietfußaußendurchmesser zwischen 0,3 und 0,7. Durch diese Maßnahme ist ein vergleichsweise gedrungener und kompakter Halbhohlstanzniet mit einer geringen Schafthohlraumlänge gebildet. Dadurch ist geometriebedingt eine hohe Eigensteifigkeit des Halbhohlstanzniets erreicht, die einem vorzeitigen Aufspreizen des Nietschafts beim Fügevorgang entgegen wirkt.

Ebenfalls zur Erhöhung der Eigensteifigkeit ist gemäß einer bevorzugten Weiterbildung vorgesehen, dass die Stirnbreite des Nietfußes, also die Wandstärke des in der Regel ringförmig ausgebildeten Nietfußes, größer ist als etwa 7% des Nietfußaußendurchmessers. Insbesondere liegt die Stirnbreite im Bereich zwischen 7% und 20% des Nietfußaußendurchmessers.

Durch diese Maßnahmen, nämlich geringe Schafthohlraumlänge und große Wandstärke des Nietfußes, ist das Volumen des Schafthohlraums gegenüber einem herkömmlichen Halbhohlstanzniet aus Stahl zwar reduziert. Jedoch ist das Volumen immer noch ausreichend für die notwendige Aufnahme des aus dem oberen Fügeteil ausgestanzten Stanzbutzens.

Die Aufgabe wird weiterhin gelöst durch einen Stanz-Halbhohlstanzniet mit den Merkmalen des Anspruchs 5. Dieser Halbhohlstanzniet ist aus Stahl und zeichnet sich durch den stumpfen Nietfuß aus, wie es im Hinblick auf die Stanznietverbindung erläutert wurde. Die zur Stanznietverbindung angeführten Vorteile und bevorzugten Ausgestaltungen gelten sinngemäß auch für den Halbhohlstanzniet. Zusätzliche vorteilhafte Weiterbildungen sind den Unteransprüchen zu entnehmen

Für eine möglichst spannungsfreie Ausbildung der Verbindung beim Stanzvorgang ist dabei in einer bevorzugten Weiterbildung ein gerundeter Übergang vom Nietschaft zur Unterseite des Nietkopfs vorgesehen. Der Übergang wird dabei insbesondere von einem Radius, dem sogenannten Unterkopfradius gebildet.

Zweckdienlicherweise ist der Schafthohlraum nach oben in Richtung zum Nietkopf ebenfalls gerundet abgeschlossen. Sowohl der abgerundete Schafthohlraum als auch der Unterkopfradius erlauben ein vergleichsweise schonendes Umformen der Fügeteile beim Stanzvorgang, so dass in den Fügeteilen und im Halbhohlstanzniet nur vergleichsweise geringe Spannungen auftreten und Spannungsspitzen vermieden sind.

Für eine möglichst stabile Ausführung des Halbhohlstanzniets ist weiterhin bevorzugt vorgesehen, dass der Schafthohlraum sich in Richtung zum Nietkopf verjüngt, so dass die Wandstärke des an der Außenseite zylindrischen Nietschafts in Richtung zum Nietkopf zunimmt. Die Zunahme der Wandstärke ist zudem ein wesentliches Element um das Aufspreizen des Halbhohlstanzniets beim Stanzvorgang im gewünschten Maße zu erzielen.

Anhand des in den Figuren dargestellten Ausführungsbeispiels ist die Erfindung näher erläutert. Es zeigen:
- Fig.1: den auf die zu fügenden Stahlbleche aufgesetzten Halbhohlstanzniet,
- Fig.2: das Durchtrennen (Lochen) der oberen Blechlage und die gleichzeitig beginnende Verformung der unteren Blechlage,
- Fig.3: das Verspreizen des Halbhohlstanzniets mit der unteren Blechlage zu einem geschlossenen Schließkopf,
- Fig.4: die fertig gefügte Nietverbindung und
- Fig.5: eine teilweise geschnittene Seitenansicht des erfindungsmäßigen Stanzniets.

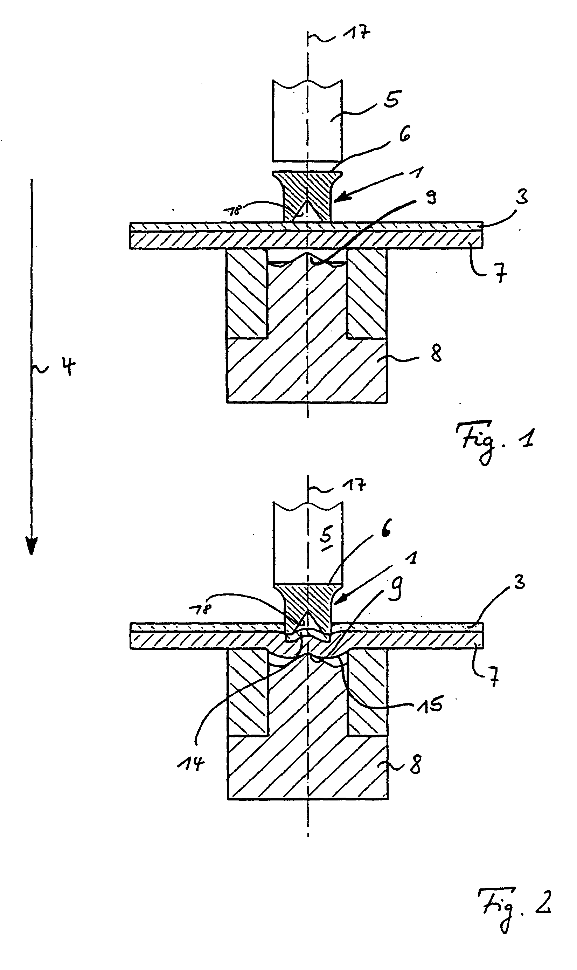

Der Halbhohlstanzniet 1 steht mit der Stirnfläche 2A seines Nietfußes 2 auf einem die obere Blechlage beim Ausführungsbeispiel bildenden oberen Stahlblech 3 auf. In Fig.1 ist der in Stanzrichtung 4 längs verschiebliche Stempel 5 der Stanznietvorrichtung in seiner Ruheposition dargestellt. Beim Nietvorgang beaufschlagt der Stempel 5 den Nietkopf 6.

In Stanzrichtung 4 ist unterhalb des oberen Stahlblechs 3 das die untere Blechlage beim Ausführungsbeispiel bildende untere Stahlblech 7 angeordnet, das ebenfalls aus einem hochfesten Stahl besteht. Das untere Stahlblech 7 liegt auf der Matrize 8 auf. An der Matrize 8 erkennbar ist der Nietdorn 9.

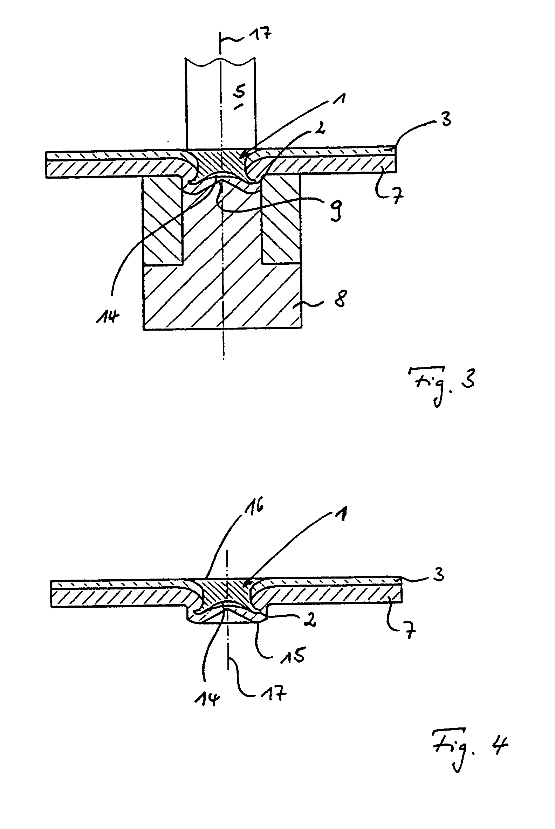

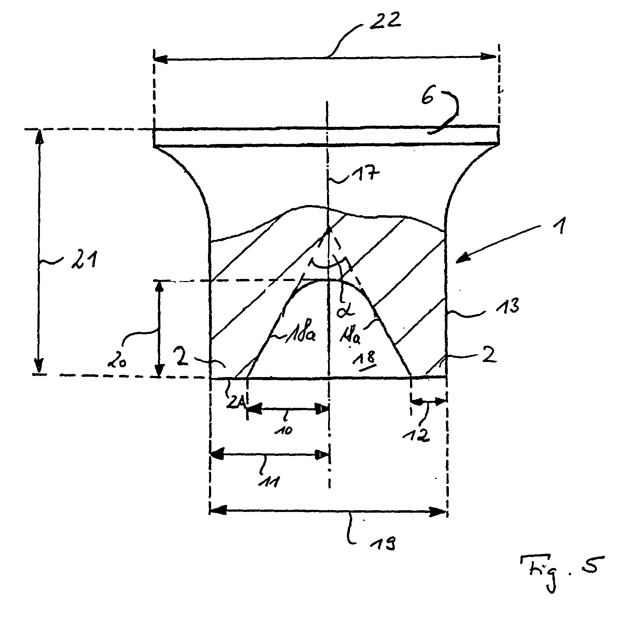

Die sich aus der Differenz des Nietfußinnenradius 10 und des Nietfußaußenradius 11 ergebende Stirnbreite 12 des Nietfußes 2 ist so dimensioniert, daß der Nietschaft 13 stabil genug ist, beim Stanzen das obere Stahlblech 3 zu durchtrennen, also zu lochen, was in Fig.2 dargestellt ist. Beim Lochen des oberen Stahlblechs 3 wird der Stanzbutzen 14 aus dem oberen Stahlblech 3 ausgestanzt. Beim Lochen des oberen Stahlblechs 3 wird das untere Stahlblech 7 durch den sich in der Stanzrichtung 4 bewegenden Stempel 5 auf dem Nietdorn 9 der Matrize 8 verformt und bildet einen napfartigen Schließkopf 15 aus. Beim Stanznieten locht folglich der Halbhohlstanzniet 1 zunächst das obere Stahlblech 3 und beginnt sich sodann zu verspreizen. Beim Verspreizen verkrallt sich der Nietfuß 2 im Bereich des Schließkopfs 15 im Blechmaterial des unteren Stahlblechs 7. Da das untere Stahlblech 7 nur umgeformt wird, ist die in Fig. 4 dargestellte fertige Stanznietverbindung im Bereich des Schließkopfs 15 absolut flüssigkeits- und gasdicht. Bei der in Fig.4 dargestellten Stanznietverbindung wird der dem Schließkopf 15 gegenüberliegende Bereich mit dem Nietkopf 6 des Halbhohlstanzniets 1 als Setzkopf 16 der Nietverbindung bezeichnet.

Der im Ausführungsbeispiel gezeigte Halbhohlstanzniet 1 ist zu seiner Mittellängsachse 17 rotationssymmetrisch aufgebaut. Der Nietschaft 13 ist beim erfindungsmäßigen Halbhohlstanzniet 1 zylinderförmig. Im Bereich des Nietkopfs 6 geht die zylindrische Kontur des Nietschafts 13 über in einen sich kegelstumpfartig erweitemden Abschnitt mit konkav gekrümmten Seitenflächen.

Am Nietfuß 2 ist ein sich zu den Nietfußstirnflächen 2A hin kegelförmig erweiternder Hohlraum 18 ausgebildet. Der Hohlraum 18 weist als Öffnungsrand am Nietfuß die kranzartige, kreisförmige Nietfußstirnfläche 2A auf. Der Halbhohlstanzniet 1 steht auf der im Hohlraum 18 umschließenden Ringfläche, nämlich der Nietfußstirnfläche 2A, solange er unverformt ist, beispielsweise in der Darstellung der Fig.1.

Die erfindungsmäßige Besonderheit des Halbhohlstanzniets 1 besteht darin, dass die Oberflächenkontur der Nietfußstirnfläche 2A nicht als spitz zulaufende Schneide, sondern als plane, konkave oder konvexe, stumpf zulaufende Fläche ausgebildet ist.

Die Stirnbreite 12 ist vorzugsweise größer als 7% des Nietfußaußendurchmessers 19. Diese Dimensionierung der Stirnbreite 12 gewährleistet einen hinreichend großen Querschnitt zum Lochen des oberen Stahlblechs 3. Gleichzeitig ist die so zwischen dem Hohlraum 18 und der Außenwand des Nietschafts 13 gebildete Ringwandung des Halbhohlstanzniets 1 so dimensioniert, daß ein plastisches Spreizen des Nietschafts 13 beim Zusammenwirken mit dem unteren Stahlblech 7 zur Bildung des Schließkopfs 15 stets gewährleistet ist.

Die Seitenflächen 18a des kegelförmigen Hohlraums 18 schließlich einen Kegelwinkel α ein, der vorzugsweise etwa zwischen 40° bis 70° und insbesondere zwischen 50° und 60° liegt. Beim Ausführungsbeispiel in Fig.5 beträgt der Kegelwinkel α 54°. Durch die kegelartige Ausgestaltung des Hohlraums 18 nimmt die Wandstärke des Nietschafts 13 vom Nietfuß 2 in Richtung zum Nietkopf 6 zu.

Das Verhältnis der Schafthohlraumlänge 20 zum Nietfußaußendurchmesser 19 beträgt etwa 0,6. Ist die Schafthohlraumlänge 20 nämlich zu gering, spreizt der Nietschaft 13 des Halbhohlstanzniets 1 sich nach dem Lochen des oberen Stahlblechs 3 nicht ausreichend auf. Ist die Schafthohlraumlänge 20 dagegen zu groß gewählt, kann dies das Lochen des oberen Stahlblechs 3 beeinträchtigen.

Die Gesamtnietlänge 21 und die Schafthohlraumlänge 20 haben beim Ausführungsbeispiel ein Verhältnis von 5:3. Der Nietkopfdurchmesser 22 entspricht etwa dem 1,5-fachen Wert des Nietfußaußendurchmessers 19.

### Bezugszeichenliste

- 1.: Stanz-Halbhohlstanzniet
- 2.: Nietfuß
- 2a: Stimfläche
- 3: Stahlblech
- 4: Stanzrichtung
- 5: Stempel
- 6: Nietkopf
- 7: Stahlblech
- 8: Matritze
- 9: Nietdorn
- 10: Nietfußinnenradius
- 11: Nietfußaußenradius
- 12: Stirnbreite
- 13: Nietschaft
- 14: Stanzbutzen
- 15: Schließkopf
- 16: Setzkopf
- 17: Mittellängsachse
- 18: Hohlraum
- 18a: Seitenfläche
- 19: Nietflußdurchmesser
- 20: Schafthohlraumlänge
- 21: Gesamtnietlänge
- 22: Nietkopfdurchmesser

## Patentansprüche

1. Stanznietverbindung mit zumindest zwei Fügeteilen (3,7) aus einem hochfesten Stahl, die mittels eines Halbhohlstanzniets (1) miteinander verbunden sind, der aus Stahl gebildet ist und der einen Nietkopf (6) sowie einen sich daran anschließenden Nietschaft (13) mit einem endseitigen Nietfuß (2) aufweist, wobei der Nietfuß (2) im Ausgangszustand vor dem Fügevorgang stumpf ausgebildet ist.

2. Stanznietverbindung nach Anspruch 1, bei der die Fügeteile (3,7) aus einem hochfesten Stahl bestehen, dessen Zugfestigkeit größer als 500 N/mm² und insbesondere größer als 700 N/mm² ist.

3. Stanznietverbindung nach Anspruch 1 oder 2, bei der der Nietfuß (2) einen Nietfußaußendurchmessers (19) und der Nietschaft (13) einen zum Nietfuß (2) hin offenen Schafthohlraum (18) mit einer Schafthohlraumlänge (20) aufweist, wobei der Quotient aus Schafthohlraumlänge (20) und Nietfußaußendurchmesser (19) zwischen 0,3 und 0,7 und insbesondere etwa 0,6 beträgt.

4. Stanznietverbindung nach einem der Ansprüche 1 bis 3, bei der der Nietfuß (2) an seinem stumpfen Ende eine Stirnbreite (12) aufweist, die größer ist als etwa 7% des Nietfußaußendurchmessers (19).

5. Stanz-Halbhohlstanzniet (1) aus Stahl, insbesondere für eine Stanznietverbindung mit Fügeteilen (3,7) aus einem hochfesten Stahl nach einem der vorhergehenden Ansprüche, mit einem Nietkopf (6) sowie mit einem sich daran anschließenden Nietschaft (13) mit einem endseitigen Nietfuß (2), wobei der Nietfuß (2) stumpf ausgebildet ist.

6. Halbhohlstanzniet (1) nach Anspruch 5, bei dem der Nietfuß (2) einen Niefußaußendurchmessers (19) und der Nietschaft (13) einen zum Nietfuß (2) hin offenen Schafthohlraum (18) mit einer Schafthohlraumlänge (20) aufweist, wobei der Quotient aus Schafthohl-raumlänge (29) und Nietfußaußendurchmesser (19) zwischen 0,3 und 0,7 und insbesondere etwa 0,6 beträgt

7. Halbhohlstanzniet (1) nach Anspruch 5 oder 6, bei dem der Nietfuß (2) an seinem stumpfen Ende eine Stirnbreite (12) aufweist, die größer ist als etwa 7% des Nietfußaußendurchmessers (19).

8. Halbhohlstanzniet (1) nach einem der Ansprüche 5 bis 7, bei dem der Übergang vom Nietschaft (13) zum Nietkopf (6) gerundet ist.

9. Halbhohlstanzniet (1) nach einem der Ansprüche 5 bis 8, bei dem der Nietschaft (13) einen sich zum Nietfuß (2) nach Art eines Kegels erweiternden Schaftholraum (18) aufweist, dessen Seitenfläche (18a) zu einer gedachten Kegelgrundfläche insbesondere einen Kegelwinkel (2) im Bereich 40°-70° einschließt.

10. Halbhohlstanzniet (1) nach Anspruch 9, bei dem der Schaftholraum (18) nach oben in Richtung zum Nietkopf (6) gerundet abgeschlossen ist.

## Claims

1. Self-piercing riveted joint having at least two parts (3, 7) to be joined which are made of high-strength steel and are to be connected to one another by means of a semitubular self-piercing rivet (1) which is formed from steel and which has a rivet head (6) and an adjoining rivet shank (13) with an end rivet foot (2), the rivet foot (2) being of truncated design in the initial state before the joining operation.

2. Self-piercing riveted joint according to Claim 1, in which the parts (3, 7) to be joined are made of a high-strength steel whose tensile strength is greater than 500 N/mm² and in particular greater than 700 N/mm².

3. Self-piercing riveted joint according to Claim 1 or 2, in which the rivet foot (2) has a rivet-foot outside diameter (19) and the rivet shank (13) has a shank cavity (18) open towards the rivet foot (2) and having a shank-cavity length (20), the quotient of shank-cavity length (20) and rivet-foot outside diameter (19) being between 0.3 and 0.7 and in particular about 0.6.

4. Self-piercing riveted joint according to one of Claims 1 to 3, in which the rivet foot (2), at its truncated end, has an end-face width (12) which is greater than about 7% of the rivet-foot outside diameter (19).

5. Self-piercing semitubular rivet (1) of steel, in particular for a self-piercing riveted joint having parts (3, 7) to be joined which are made of high-strength steel according to one of the preceding claims, having a rivet head (6) and an adjoining rivet shank (13) with an end rivet foot (2), the rivet foot (2) being of truncated design.

6. Self-piercing semitubular rivet (1) according to Claim 5, in which the rivet foot (2) has a rivet-foot outside diameter (19) and the rivet shank (13) has a shank cavity (18) open towards the rivet foot (2) and having a shank-cavity length (20), the quotient of shank-cavity length (20) and rivet-foot outside diameter (19) being between 0.3 and 0.7 and in particular about 0.6.

7. Self-piercing semitubular rivet (1) according to Claim 5 or 6, in which the rivet foot (2), at its truncated end, has an end-face width (12) which is greater than about 7% of the rivet-foot outside diameter (19).

8. Self-piercing semitubular rivet (1) according to one of Claims 5 to 7, in which the transition from the rivet shank (13) to the rivet head (6) is rounded.

9. Self-piercing semitubular rivet (1) according to one of Claims 5 to 8, in which the rivet shank (13) has a shank cavity (18) which widens towards the rivet foot (2) like a cone and whose side surface (18a) encloses in particular a cone angle (2) within the range of 40°-70° relative to an imaginary cone base area.

10. Self-piercing semitubular rivet (1) according to Claim 9, in which the shank cavity (18) is closed off in a rounded manner at the top in the direction of the rivet head (6).

## Revendications

1. Liaison par rivetage poinçonnant comportant au moins deux pièces à assembler (3, 7) en acier hautement résistant qui sont reliées l'une à l'autre au moyen d'un rivet poinçonnant semi-creux (1) qui est formé en acier et qui comprend une tête de rivet (6) ainsi qu'une tige de rivet (13) qui s'y raccorde avec un pied de rivet (2) du côté extrémité, le pied de rivet (2) étant réalisé émoussé dans l'état initial avant l'opération d'assemblage.

2. Liaison par rivetage poinçonnant selon la revendication 1, dans laquelle les pièces à assembler (3, 7) sont constituées en acier hautement résistant dont la résistance à la traction est supérieure à 500 N/mm² et en particulier supérieure à 700 N/mm².

3. Liaison par rivetage poinçonnant selon l'une ou l'autre des revendications 1 et 2, dans laquelle le pied de rivet (2) présente un diamètre extérieur (19) et la tige de rivet (13) présente une cavité de tige (18) ouverte vers le pied de rivet (2) et présentant une longueur de cavité de tige (20), le quotient de la longueur de cavité de tige (20) sur le diamètre extérieur de pied de rivet (19) étant compris entre 0,3 et 0,7 et en particulier égal à environ 0,6.

4. Liaison par rivetage poinçonnant selon l'une des revendications 1 à 3, dans laquelle le pied de rivet (2) présente à son extrémité émoussée une largeur frontale (12) qui est supérieure à environ 7 % du diamètre extérieur ( 19) du pied de rivet.

5. Rivet poinçonnant semi-creux (1) en acier, en particulier pour une liaison par rivetage poinçonnant avec des pièces à assembler (3, 7) en acier hautement résistant, selon l'une des revendications précédentes, comportant une tête de rivet (6) ainsi qu'une tige de rivet (13) qui s'y raccorde avec un pied de rivet (2) du côté extrémité, le pied de rivet (2) étant réalisé émoussé.

6. Rivet poinçonnant semi-creux (1) selon la revendication 5, dans lequel le pied de rivet (2) présente un diamètre extérieur (19) et la tige de rivet (13) présente une cavité de tige (18) ouverte vers le pied de rivet (2) et présentant une longueur de cavité de tige (20), le quotient de la longueur de cavité de tige (20) sur le diamètre extérieur de pied de rivet (19) étant compris entre 0,3 et 0,7 et en particulier égal à environ 0,6.

7. Rivet poinçonnant semi-creux (1) selon l'une ou l'autre des revendications 5 et 6, dans lequel le pied de rivet (2) présente à son extrémité émoussée une largeur frontale (12) qui est supérieure à environ 7 % du diamètre extérieur (19) du pied de rivet.

8. Rivet poinçonnant semi-creux (1) selon l'une des revendications 5 à 7, dans lequel la transition de la tige de rivet (13) vers la tête de rivet (6) est arrondie.

9. Rivet poinçonnant semi-creux (1) selon l'une des revendications 5 à 8, dans lequel la tige de rivet (13) présente une cavité de tige (18) qui s'élargit à la manière d'un cône vers le pied de rivet (2) et dont la surface latérale (18a) enferme en particulier un angle de cône (2) dans la plage de 40° à 70° par rapport à une surface de fond de cône imaginaire.

10. Rivet poinçonnant semi-creux (1) selon la revendication 9, dans lequel la cavité de tige (18) est refermée de façon arrondie vers le haut en direction de la tête de rivet (6).
